# EUROPEAN PATENT SPECIFICATION

(11) **EP 1 487 717 B1**
(45) Date of publication and mention of the grant of the patent: **08.02.2006**
(21) Application number: 03745320.6
(22) Date of filing: 18.03.2003
(51) Int. Cl.: B65D 83/16

(54) **A DEVICE FOR ACTUATING THE VALVE OF AN AEROSOL CONTAINER**
VORRICHTUNG ZUR BETÄTIGUNG DES VENTILS EINES AEROSOLBEHÄLTERS
DISPOSITIF POUR ACTIONNER LA VALVE D'UN CONTENANT D'AEROSOL

(30) Priority: 27.03.2002 EP 02252278
(43) Date of publication of application: 22.12.2004
(73) Proprietor: Rentokil Initial U.K. Limited, East Grinstead, West Sussex RH19 2JY (GB)
(72) Inventor: LAWSON, Trevor John, Rentokil Initial UK Limited, East Grinstead, West Sussex RH19 2JY (GB); BRIGHAM, Andrew, John, Rentokil Initial UK Limited, East Grinstead, West Sussex RH19 2JY (GB); BEST, Michael, Edward Greaves Best Design, Lockerly, Hampshire SO51 0JT (GB); ROBERT-JONES, Martin, Greaves Best Design, Lockerly, Hampshire SO51 0JT (GB)
(74) Representative: Mair, Richard Douglas
(86) International application number: PCT/GB2003/001118
(87) International publication number: WO 2003/082709

(56) References cited:
- US-A- 4 426 026

## Description

The invention relates to a device which is attachable to an aerosol container for actuating the valve of the aerosol container.

US 4 426 026A discloses an aerosol assembly including a valve for discharging the contents of a container, an actuator button, substantially the shape of a truncated cone, connected to the valve through a valve stem, for opening the valve upon movement of the actuator button, a one-piece over-cap having an integral finger actuator for covering the actuator button, and a plurality of projections on the underside of the finger actuator for contacting the actuator button on the application of finger pressure, to open the valve.

The invention provides a device which is attachable to an aerosol container for actuating the valve of the aerosol container including:
a housing including a collar for gripping the aerosol container for effecting attachment of the device to the aerosol container, the housing being so shaped that, when the device is attached to the aerosol container, the housing encloses the valve of the aerosol container and
an operating member including a wedge-shaped end portion,
the operating member being movable along guide means in the housing and the operating member being so positioned that, when the device is attached to an aerosol container and the operating member is moved along the guide means, the wedge-shaped end portion bears on the valve of the aerosol container, to actuate the valve.

Preferably, at least one surface of the housing and the operating member, which contact each other, includes formations which make the operating member more easily movable towards bearing on the valve of the aerosol container than in the opposite direction.

Preferably, a surface of the housing which is in contact with a surface of the operating member includes saw-tooth-shaped formations.

Preferably, the guide means in the housing includes saw-tooth-shaped formations.

Preferably, a surface of the operating member which is in contact with a surface of the housing includes sawtooth-shaped formations.

Preferably, the housing includes a rectangular tubular portion in which lie the operating member and the guide means.

Preferably, the rectangular tubular portion is so shaped as to include an opening through which the operating member is visible when it occupies a position, in the rectangular tubular portion, where it actuates the valve of a container to which the device is attached.

In one arrangement, the rectangular tubular portion is tapered, being larger within the collar than outside the collar.

Preferably, the operating member includes a linear portion to which the wedge-shaped end portion forms an extension.

The invention also provides a mechanism including the device and a controllable actuator for moving the operating member along the guide means in the housing of the device.

In one arrangement of the mechanism, the controllable actuator includes:
a resilient member for providing motive power for the mechanism,
an intermediate member, so mounted on a pivotal support as to be movable under motive power from the resilient member, for moving the operating member along the guide means in the housing under motive power from the resilient member,
a latch arrangement for holding the intermediate member in a first position at which the intermediate member is restrained from moving the operating member and
electrical control means for releasing the hold of the latch arrangement, permitting the intermediate member to move from the first position to move the operating member along the guide means in the housing under motive power from the resilient member.

The invention also provides a pest trap including the mechanism and:
an enclosure capable of accommodating the pest,
an entry port permitting the entry of the pest into the enclosure,
detector means capable of detecting the presence of the pest in the enclosure,
signalling means for signalling the detection of the presence of the pest in the enclosure and
closure means capable of closing the entry port in response to signalling by the signalling means,
the mechanism being located in the enclosure and
the closure means being so connected to the controllable actuator as to effect closure of the entry port when the controllable actuator moves the operating member along the guide means in the housing of the device.

The pest trap may include a second port in which case the closure means is capable of closing both ports in response to signalling by the signalling means.

A device in accordance with the invention, a mechanism including the device and a pest trap including the mechanism will now be described, by way of example only, with reference to the accompanying drawings in which:
Fig. 1 represents a perspective view of a mechanism including the device attached to a cylindrical aerosol container, the device being in its ready-to-operate condition,
Fig. 2 represents a perspective view of the mechanism of Fig. 1 in which the device is in its operated condition,
Fig. 3 represents a view of the mechanism of Fig. 1 in a pest trap enclosure, cut along the axis of the cylindrical aerosol container, with the device in its operated condition,
Fig. 4 represents an enlarged view of a part of Fig. 3 showing the device and components in the immediate vicinity of the device,
Fig. 5 represents an end-on view of the device,
Fig. 6 represents a side view of the device,
Fig. 7 represents a side view of the device from a direction orthogonal to the viewing direction of Fig. 6 and
Fig. 8 is a perspective view of a pest trap enclosure in which,the mechanism of Fig. 1 may be installed.

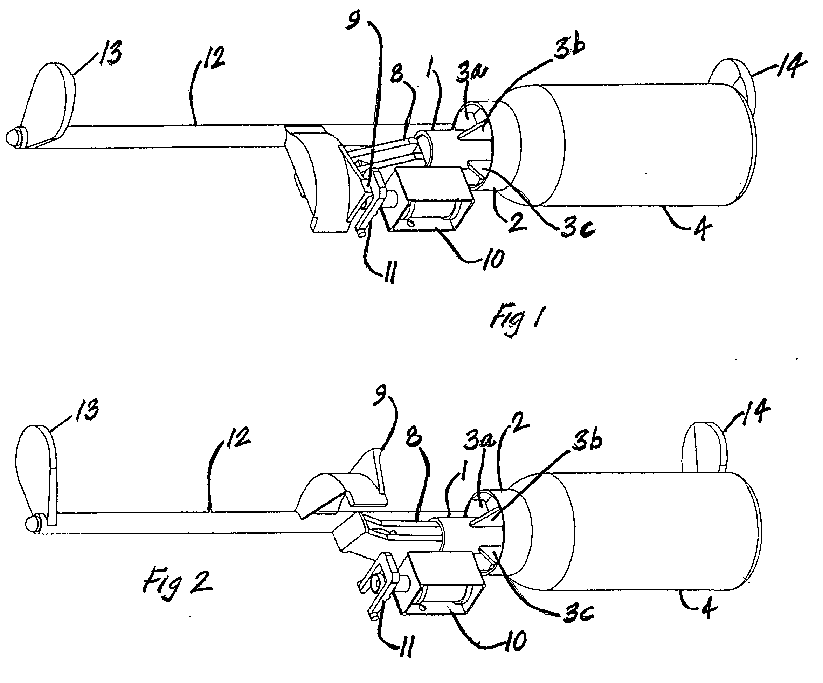

Referring to Fig. 1 of the accompanying drawings, the device for actuating the valve of an aerosol container includes a housing which encloses the valve of the aerosol container 4 when, as shown, the device is attached to the aerosol container 4. The housing includes a tubular portion 1 attached to a cylindrical collar 2 by a plurality of webs 3a, 3b and 3c extending radially between the outer periphery of the tubular portion 1 and the inner periphery of the cylindrical collar 2, the tubular portion 1 being in longitudinal alignment with the axis of the cylindrical collar 2. The cylindrical collar 2 grips the aerosol container 4, for effecting attachment of the device to the aerosol container 4, by engaging a ring (not shown) which surrounds the valve of the aerosol container 4 and protrudes from the surface of the aerosol container 4 in the vicinity of the valve.

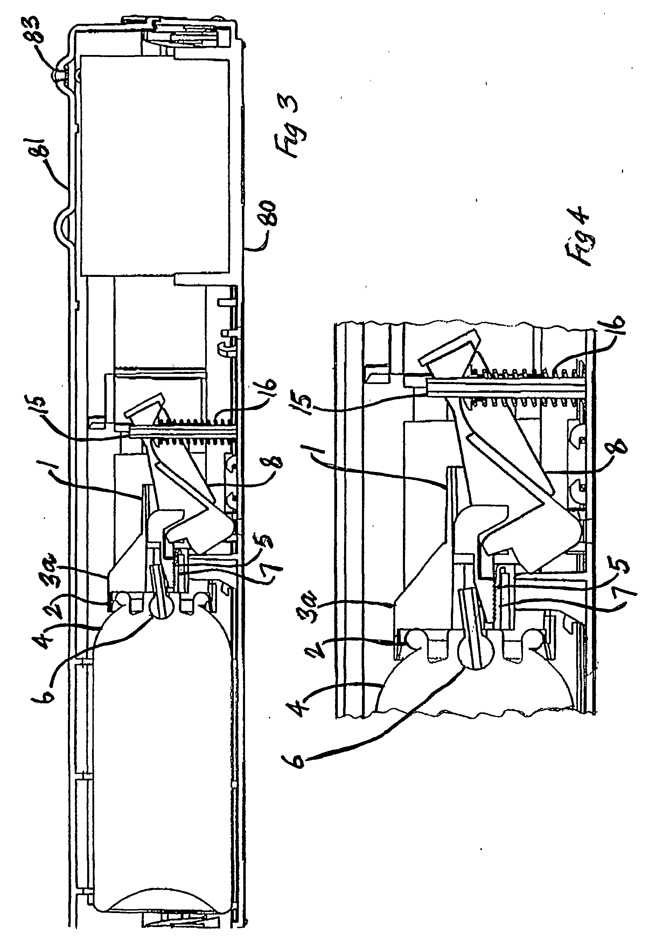

Referring to Fig. 3 of the accompanying drawings, the device includes, further, an operating member 5 which lies within the housing. The operating member 5 has a wedge-shaped end portion so positioned as to bear on the valve 6 of the aerosol container 4 when the operating member 5 is pushed into the housing. The operating member 5 has, also, a linear portion to which the wedge-shaped end portion forms an extension, the linear portion serving as a means of pushing on the wedge-shaped end portion. The housing includes internal guide means 7 supporting the operating member 5. A force for pushing the operating member 5 is applied to the end of the linear portion of the operating member 5 which is movable along the guide means 7.

The device as shown in Fig. 3 is in the operated condition in which the aerosol container 4 is discharged, the valve 6, which is a tilt valve, being in the tilted condition as a result of forces exerted on it by the wedge-shaped end portion of the operating member 5. Movement of the operating member 5 to the left as viewed, into the housing, has effected the deflection of the valve 6 of the aerosol container 4 upwards as viewed, opening the valve 6 and leaving the device in the operated condition.

The guide means 7 in the housing and the surface of the operating member 5, which is in contact with the guide means 7, include sawtooth-shaped formations which so engage with each other that the operating member 5 is more easily movable towards bearing on the tilt valve 6 than in the opposite direction. In practice, the operating member 5 is easily movable towards bearing on the tilt valve 6 and is hardly movable in the opposite direction, a result of which is that, in the operated condition, the device and the aerosol container 4 are more or less inseparable.

The arrangement whereby the actuated device and the aerosol container 4 are more or less inseparable serves to identify an exhausted aerosol container.

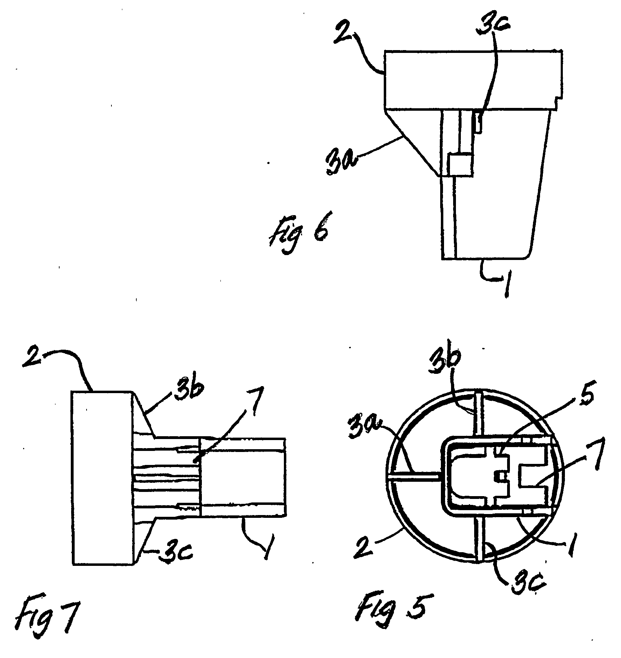

Fig. 4 of the accompanying drawings is an enlarged representation of a part of Fig. 3 in which the device is in the operated condition and shows the tubular portion 1, the cylindrical collar 2, the web 3a and the guide means 7 of the housing of the device which is attached to the aerosol container 4. Also shown are the operating member 5 of the device and the tilt valve 6 of the aerosol container 4.

Although both the operating member 5 and the guide means 7 include sawtooth-shaped formations, satisfactory results are obtainable when either the operating member 5 or the guide means 7 includes the sawtooth-shaped formations. Also, alternative formations including part-spherical or rectangular formations are suitable. Parts of the housing, other than the guide means 7, which come into contact with the operating member 5 may include formations allowing easier movement in one direction than in another. Further, the housing of the device may be such as to grip the body of the aerosol container 4 rather than the ring surrounding the valve 6 of the aerosol container 4 although such an arrangement is likely to be bulkier than the present arrangement.

Referring to Fig. 5 of the accompanying drawings, an end-on view of the device shows the tubular portion 1 as being rectangular in form. A wall of the rectangular tubular portion 1 is attached directly to the cylindrical collar 2 and the other walls are attached to the cylindrical collar 2 by the webs 3a, 3b and 3c. The guide means 7 lies on the wall of the rectangular tubular portion 1 which is attached directly to the cylindrical collar 2 and the operating member 5 lies in contact with the guide means 7 and the walls of the rectangular tubular portion 1 to which are attached the webs 3a, 3b and 3c.

Referring to Fig. 6 of the accompanying drawings, the rectangular tubular portion 1 is deeper within the cylindrical collar 2 than it is outside the cylindrical collar 2, the change in depth being uniform. The reduced depth of the rectangular tubular portion 1 outside the cylindrical collar 2 is not essential but serves to reduce congestion in a pest trap, say, which includes the device.

Referring to Fig. 7 of the accompanying drawings, the wall of the rectangular tubular portion 1 which is attached directly to the cylindrical collar 2 and the guide means 7 is shorter than the other walls of the rectangular tubular portion 1, in order to facilitate access to the operating member 5 within the device.

The rectangular tubular portion 1 is so shaped as to include an opening through which the operating member 5 is visible when it occupies a position, in the rectangular tubular portion 1, where it actuates the valve of a container to which the device is attached. The inclusion of the opening permits a serviceman to determine, by inspection, if a device has been actuated, reducing the chances of an unserviceable device being mistaken for a serviceable one.

Fig. 1 shows, in addition to the device for actuating the valve of the aerosol container 4, a controllable actuator for actuating the device by moving the operating member 5 (Fig. 3) along the guide means 7 (Fig. 3) in the housing, from the ready-to-operate position to the operated position, effecting the operation of the tilt valve 6 (Fig. 3) of the aerosol container 4.

The controllable actuator is shown in its set condition in Fig. 1 and includes an intermediate member 8 which is mounted on a pivotal support, a latch arrangement including members 9 and 11 for holding the intermediate member 8 in a first position, as shown, at which the intermediate member 8 is restrained from moving as a result of the member 9 of the latch arrangement lying over (as viewed) the intermediate member 8. The controllable actuator includes an electrical control means for controlling the member 11 of the latch arrangement and, thereby, the intermediate member 8.

The electrical control means includes a solenoid 10 mechanically linked to the member 11 of the latch arrangement. The member 11 is U-shaped and is so mounted as to be pivotable about the ends of the U-shape. The solenoid 10 controls the pivotal position of the U-shaped member 11. The member 9 of the latch arrangement includes a projection which engages the U-shaped member 11 for holding the member 9 of the latch arrangement over the intermediate member 8. The intermediate member 8 is held in a first position when so held by the holding member 9.

Figs. 1 and 2 show, in addition to the device for actuating the valve 6 of the aerosol container 4 and the controllable actuator for the device, a cylindrical shaft 12 which is so mounted as to be pivotable about its axis. The member 9 of the latch arrangement is attached to and moves with the cylindrical shaft 12 which carries a first disc member 13 at one end and a second disc member 14 at the other end, the disc members being shown, in Fig. 1, at a first position and moving from the first to a second position, shown in Fig. 2, as the shaft 12 rotates.

Fig. 2 shows the controllable actuator in its actuated condition in which the member 9 of the latch arrangement has been pushed away by the intermediate member 8, the U-shaped member 11 of the latch arrangement having been pulled to the right, as viewed, by the solenoid 10 to release the member 9 of the latch arrangement. The resilience of a helical spring 16, shown in Fig. 3, provides the force required by the intermediate member 8 to push away the member 9 of the latch arrangement.

Referring to Fig. 3, the helical spring 16 is so positioned that it is compressed by the intermediate member 8 when the controllable actuator is in the set condition in which the member 9 of the latch arrangement lies over the intermediate member 8 and is held by the U-shaped member 11 of the latch arrangement (Fig. 1). The helical spring 16 lies around a support pillar 15 which serves as a guide for the helical spring 16. The pivotal mounting of the intermediate member 8 lies to the left, as viewed in Fig. 3, of the helical spring 16 which acts to lift a part of the intermediate member 8 which lies directly above, as viewed in Fig. 3, the helical spring 16.

Referring to Figs. 3 and 4, when the helical spring 16 is freed, it lifts the part of the intermediate member 8 directly above it, causing the intermediate member 8 to swing about its pivot and push the operating member 5 from its ready-to-operate position to its operated position, corresponding to the controllable actuator moving from the set to the actuated condition. The movement of the intermediate member 8 results in the tilt valve of the aerosol container 4 being operated by the device attached to the aerosol container 4 as described above.

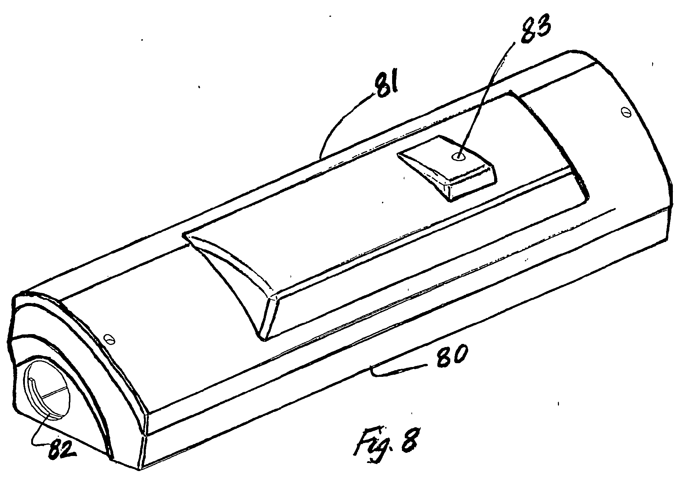

The movement of the intermediate member 8 also results in the member 9 of the latch arrangement being pushed upwards, as viewed, rotating the cylindrical shaft 12 shown in Figs. 1 and 2. The cylindrical shaft 12 takes the first and second disc members 13 and 14 with it as it rotates. The first and second disc members 13 and 14 serve as closure members in a pest trap enclosure as shown in Fig. 8 of the accompanying drawings.

Referring to Fig. 8, the pest trap enclosure includes a lower part 80 and an upper part 81, the enclosure accommodating the mechanism shown in Fig. 1 including the aerosol container 4, the device for actuating the tilt valve of the aerosol container 4, the controllable actuator and the rotatable shaft 12 carrying the first and second disc members 13 and 14. The pest trap enclosure includes an entry port 82 which is visible on the left side of the lower part 80 of the enclosure, as viewed, and a second port opposite the entry port. The second port is not visible in the view shown in Fig. 8. There is an indicator port 83 in the top of the upper part 81 of the enclosure.

In a pest trap including the enclosure shown in Fig. 8, the first and second disc members 13 and 14 shown in Fig. 1 serve as closure members for the entry port 82 and the second port. The second port, also, may serve as an entry port to the enclosure for a pest approaching from a direction from which the second port permits access to the enclosure.

The disc members 13 and 14 may be circular, elliptical or rectangular in shape. Also, the rotatable shaft 12 may be of a rectangular transverse cross-section.

The pest trap further includes detector means for detecting the presence of a pest in the enclosure and signalling means for signalling the detection of the pest in the enclosure, the controllable actuator, in operation, closing the ports by moving the first and second disc members 13 and 14 to cover the ports in response to signalling by the signalling means and, at that time, moving the operating member 5 along the guide means in the housing of the device for actuating the tilt valve 16 of the aerosol container 4.

A detector and signalling means suitable for the pest trap is disclosed in International Application No. PCT/GB01/04585.

The detector and signalling means referred to above includes a pressure pad for detecting the presence of a pest in the enclosure and an electrical circuit for signalling the activation of the pressure pad. The detector and signalling means referred to also includes an indicator lamp which is positioned adjacent to the indicator port 83 of Fig. 8 and visible from outside the pest trap enclosure, for indicating whether the controllable actuator and, thereby, the pest trap, is set or actuated.

Fig. 3 shows the lower part 80, the upper part 81 and the indicator port 83 of the pest trap enclosure.

## Claims

1. A device which is attachable to an aerosol container for actuating the valve of the aerosol container including:
a housing (1, 2, 3) including a collar (2) for gripping the aerosol container (4) for effecting attachment of the device to the aerosol container (4), the housing (1,2,3) being so shaped that, when the device is attached to the aerosol container (4), the housing encloses the valve (6) of the aerosol container and
an operating member (5) including a wedge-shaped end portion, **characterised in that** the operating member (5) is movable along guide means (7) in the housing (1,2,3), the operating member (5) being so positioned that, when the device is attached to an aerosol container and the operating member (5) is moved along the guide means (7), the wedge-shaped end portion bears on the valve (6) of the aerosol container (4), to actuate the valve.

2. A device as claimed in claim 1, wherein at least one surface of the housing (1,2,3) and the operating member (5) which contact each other, includes formations which make the operating member more easily movable towards bearing on the valve (6) of the aerosol container than in the opposite direction.

3. A device as claimed in claim 2, wherein a surface of the housing (1,2,3) which is in contact with a surface of the operating member (5) includes sawtooth-shaped formations.

4. A device as claimed in claim 2 or claim 3, wherein the guide means (7) in the housing (1,2,3) includes sawtooth-shaped formations.

5. A device as claimed in any one of claims 2 to 4,
wherein a surface of the operating member (5) which is in contact with a surface of the housing (1,2,3) includes sawtooth-shaped formations.

6. A device as claimed in any one of claims 1 to 5,
wherein the housing (1, 2, 3) includes a rectangular tubular portion (1) in which lie the operating member (5) and the guide means (7).

7. A device as claimed in claim 6, wherein the rectangular tubular portion (1) is so shaped as to include an opening through which the operating member (5) is visible when it occupies a position, in the rectangular tubular portion (1), where it actuates the valve (6) of a container (4) to which the device is attached.

8. A device as claimed in claim 6 or claim 7, wherein the rectangular tubular portion (1) is tapered, being larger within the collar (2) than outside the collar (2).

9. A device as claimed in any one of claims 6 to 8,
wherein the operating member (5) includes a linear portion to which the wedge-shaped end portion forms an extension.

10. A mechanism including a device, as claimed in any one of claims 1 to 9, and a controllable actuator for moving the operating member (5) along the guide means (7) in the housing of the device.

11. A mechanism as claimed in claim 10, wherein the controllable actuator includes:
a resilient member (16) for providing motive power for the mechanism,
an intermediate member (8), so mounted on a pivotal support as to be movable under motive power from the resilient member (16), for moving the operating member (5) along the guide means (7) in the housing (1,2,3) under motive power from the resilient member (16),
a latch arrangement (9,11) for holding the intermediate member (8) in a first position at which the intermediate member (8) is restrained from moving the operating member (5) and
electrical control means for releasing the hold of the latch arrangement (9,11), permitting the intermediate member (8) to move the operating member (5) along the guide means (7) in the housing (1,2,3) under motive power from the resilient member (16).

12. A pest trap including a mechanism as claimed in claim 10 or claim 11 and:
an enclosure (80,81) capable of accommodating the pest,
an entry port (82) permitting the entry of the pest into the enclosure (80,81),
detector means capable of detecting the presence of the pest in the enclosure (80,81),
signalling means for signalling the detection of the presence of the pest in the enclosure (80,81) and
closure means (12,13) capable of closing the entry port (82) in response to signalling by the signalling means,
the mechanism being located in the enclosure (80,81) and
the closure means (12,13) being so connected to the controllable actuator as to effect closure of the entry port (82) when the controllable actuator moves the operating member (5) along the guide means (7) in the housing (1,2,3) of the device.

13. A pest trap as claimed in claim 12, including a second port and closure means (12, 13, 14) capable of closing both ports in response to signalling by the signalling means.

## Patentansprüche

1. Vorrichtung, die an einem Aerosolbehälter zum Betätigen des Ventils des Aerosolbehälters befestigbar ist, mit
einem Gehäuse (1, 2, 3) mit einem Kragen (2) zum Festklemmen des Aerosolbehälters (4), um eine die Befestigung der Vorrichtung an dem Aerosolbehälter (4) zu bewirken, wobei das Gehäuse (1, 2, 3) derart geformt ist, dass es das Ventil (6) des Aerosolbehälters umschließt, wenn die Vorrichtung an dem Aerosolbehälter (4) befestigt wird, und
einem Betätigungselement (5) mit einem keilförmigen Endabschnitt, **dadurch gekennzeichnet, dass**
das Betätigungselement (5) entlang von Führungsmitteln (7) in dem Gehäuse (1, 2, 3) bewegbar ist und das Betätigungselement (5) derart positioniert ist dass, wenn die Vorrichtung an einem Aerosolbehälter befestigt ist und das Betätigungselement (5) entlang der Führungsmittel (7) bewegt wird, der keilförmige Endabschnitt auf das Ventil (6) des Aerosolbehälters (4) drückt, um das Ventil zu betätigen.

2. Vorrichtung nach Anspruch 1, wobei mindestens eine Oberfläche des Gehäuses (1, 2, 3) und des Betätigungselements (5), die sich einander berühren, Anordnungen aufweisen, die es ermöglichen, das Betätigungselement leichter in Richtung auf das Ventil (6) des Aerosolbehälters zu als in die entgegengesetzte Richtung zu bewegen.

3. Vorrichtung nach Anspruch 2, wobei eine Oberfläche des Gehäuses (1, 2, 3), welches in Kontakt mit einer Oberfläche des Betätigungselements (5) ist, sägezahnförmige Ausgestaltungen aufweist.

4. Vorrichtung nach Anspruch 2 oder 3, wobei die Führungsmittel (7) in dem Gehäuse (1, 2, 3) sägezahnförmige Ausgestaltungen aufweisen.

5. Vorrichtung nach einem der Ansprüche 2 bis 4, wobei eine Oberfläche des Betätigungselements (5), die in Kontakt mit einer Oberfläche des Gehäuses (1, 2, 3) steht, sägezahnförmige Ausgestaltungen aufweist.

6. Vorrichtung nach einem der Ansprüche 1 bis 5, wobei das Gehäuse (1, 2, 3) einen rechteckigen röhrenförmigen Abschnitt (1) aufweist, in dem sich das Betätigungselement (5) und die Führungsmittel (7) befinden.

7. Vorrichtung nach Anspruch 6, wobei der rechteckige röhrenförmige Abschnitt (1) derart geformt ist, dass er eine Öffnung aufweist, durch die das Betätigungselement (5) sichtbar ist, wenn es eine Position in dem rechteckigen röhrenförmigen Abschnitt (1) einnimmt, bei der es das Ventil (6) eines Behälters (4) betätigt, an dem die Vorrichtung befestigt ist.

8. Vorrichtung nach den Ansprüchen 6 oder 7, wobei der rechteckige röhrenförmige Abschnitt (1) sich verjüngt und innerhalb des Kragens (2) größer ist als außerhalb des Kragens (2).

9. Vorrichtung nach einem der Ansprüche 6 bis 8, wobei das Betätigungselement (5) einen linearen Abschnitt aufweist, zu dem der keilförmige Endabschnitt eine Verlängerung darstellt.

10. Mechanismus mit einer Vorrichtung nach einem der Ansprüche 1 bis 9, und kontrollierbares Stellglied zum Bewegen des Betätigungselements (5) entlang der Führungsmittel (7) in dem Gehäuse der Vorrichtung.

11. Mechanismus nach Anspruch 10, wobei das kontrollierbare Stellglied folgende Merkmale aufweist:
ein elastisches Element (16) zur Versorgung des Mechanismus mit Antriebskraft,
ein Zwischenelement (8), das derart auf einem als Drehpunkt dienenden Halter angebracht ist, dass es durch die Antriebskraft des elastischen Elements (16) bewegbar ist, um das Betätigungselement (5) entlang der Führungsmittel (7) in dem Gehäuse (1, 2, 3) durch die Antriebskraft des elastischen Elements (16) zu bewegen,
eine Verriegelungsanordnung (9, 11) zum Halten des Zwischenelements (8) in einer ersten Position, bei der das Zwischenelement (8) davon abgehalten wird, das Betätigungselement (5) zu bewegen, und
elektrische Kontrollmittel zum Freigeben der Sperre der Verriegelungsanordnung (9, 11), wodurch es dem Zwischenelement (8) ermöglicht wird, mittels der Antriebskraft des elastischen Elements (16) das Betätigungselement (5) entlang der Führungsmittel (7) in dem Gehäuse (1, 2, 3) zu bewegen.

12. Insektenfalle mit einem Mechanismus nach Anspruch 10 oder 11 und
einem Behältnis (80, 81) zur Aufnahme des Ungeziefers,
einer Eintrittsöffnung (82), die den Eintritt des Ungeziefers in das Behältnis (80, 81) ermöglicht,
Detektormitteln zum Feststellen der Anwesenheit eines Ungeziefers in dem Behältnis (80, 81),
Signalisierungsmitteln zum Signalisieren des Feststellens der Anwesenheit eines Ungeziefers in dem Behältnis (80, 81) und
Verschlussmitteln (12, 13) zum Verschließen der Eintrittsöffnung (82) als Reaktion auf die Signalisierung durch die Signalisierungsmittel,
wobei sich der Mechanismus in dem Behältnis (80, 81) befindet und
die Verschlussmittel (12, 13) derart mit dem steuerbaren Stellglied verbunden sind, dass sie die Schließung der Eintrittsöffnung (82) bewirken, wenn das steuerbare Stellglied das Betätigungselement (5) entlang der Führungsmittel (7) in dem Gehäuse (1, 2, 3) der Vorrichtung bewegt.

13. Insektenfalle nach Anspruch 12 mit einer zweiten Öffnung und Verschlussmitteln (12, 13, 14), welche beide Öffnungen als Reaktion auf die Signalisierung durch die Signalisierungsmittel verschließen können.

## Revendications

1. Dispositif destiné à être fixé à un contenant d'aérosol pour actionner la valve du contenant d'aérosol, comprenant :
un boîtier (1, 2, 3) incluant un anneau (2) pour venir en prise avec le contenant d'aérosol (4) afin d'effectuer une fixation du dispositif au contenant d'aérosol (4), le boîtier (1, 2, 3) étant conformé de telle sorte que, lorsque le dispositif est fixé au contenant d'aérosol (4), le boîtier entoure la valve du contenant d'aérosol, et
un organe d'actionnement (5) incluant une extrémité en forme de coin,
**caractérisé en ce que**
l'organe d'actionnement (5) est mobile le long de moyens de guidage (7) dans le boîtier (1, 2, 3) et l'organe d'actionnement (5) est positionné de telle sorte que, lorsque le dispositif est fixé à un contenant d'aérosol et que l'organe d'actionnement (5) est déplacé le long des moyens de guidage (7), l'extrémité en forme de coin appuie sur la valve (6) du contenant d'aérosol (4), pour actionner la valve.

2. Dispositif selon la revendication 1, dans lequel au moins une surface du boîtier (1, 2, 3) et l'organe d'actionnement (5) qui sont en contact l'un avec l'autre comportent des moyens qui rendent l'organe d'actionnement plus facilement mobile dans le sens de l'appui sur la valve (6) du contenant d'aérosol que dans la direction opposée.

3. Dispositif selon la revendication 2, dans lequel une surface du boîtier (1, 2, 3) qui est en contact avec une surface de l'organe d'actionnement (5) comporte des moyens sous forme de dents de scie.

4. Dispositif selon la revendication 2 ou la revendication 3, dans lequel les moyens de guidage (7) dans le boîtier (1, 2, 3) comportent des moyens sous forme de dents de scie.

5. Dispositif selon l'une des revendications 2 à 4, dans lequel une surface de l'organe d'actionnement (5) qui est en contact avec une surface du boîtier (1, 2, 3) comporte des moyens sous forme de dents de scie.

6. Dispositif selon l'une des revendications 1 à 5, dans lequel le boîtier (1, 2, 3) comporte une partie rectangulaire tubulaire (1) dans lequel se trouvent l'organe d'actionnement (5) et les moyens de guidage (7).

7. Dispositif selon la revendication 6, dans lequel la partie rectangulaire tubulaire (1) est conformée de telle sorte qu'elle inclut une ouverture à travers laquelle l'organe d'actionnement (5) est visible quand il occupe, dans la partie rectangulaire tubulaire, la position dans laquelle il actionne la valve (6) du contenant (4) auquel le dispositif est fixé.

8. Dispositif selon la revendication 6 ou la revendication 7, dans lequel la partie rectangulaire tubulaire (1) est effilée pour être plus large à l'intérieur de l'anneau (2) qu'à l'extérieur de l'anneau (2).

9. Dispositif selon l'une des revendications 6 à 8, dans lequel l'organe d'actionnement (5) comporte une partie linéaire dont l'extrémité en forme de coin forme un prolongement.

10. Mécanisme incluant un dispositif, selon l'une des revendications 1 à 9, et un actionneur de commande pour déplacer l'organe d'actionnement (5) le long des moyens de guidage (7) dans le boîtier du dispositif.

11. Mécanisme selon la revendication 10, dans lequel l'actionneur de commande comporte :
un organe élastique (16) pour fournir une force motrice pour le mécanisme,
un organe intermédiaire (8), monté sur un support pivotant de manière à pouvoir être déplacé grâce à la force motrice de l'organe élastique (16), afin de déplacer l'organe d'actionnement (5) le long des moyens de guidage (7) dans le boîtier (1, 2, 3) grâce à la force motrice de l'organe élastique (16),
un système formant loquet (9, 11) pour maintenir l'organe intermédiaire (8) dans une première position dans laquelle l'organe intermédiaire (8) est empêché de déplacer l'organe d'actionnement (5) et
des moyens de commande électriques pour libérer le maintien opéré par le système formant loquet (9, 11), permettant à l'organe intermédiaire (8) de déplacer l'organe d'actionnement (5) le long des moyens de guidage (7) dans le boîtier (1, 2, 3) grâce à la force motrice de l'organe élastique (16).

12. Piège à animal nuisible comportant un mécanisme selon la revendication 10 ou la revendication 11 et :
une enceinte (80, 81) capable de loger l'animal nuisible,
une ouverture d'entrée (82) permettant l'entrée de l'animal nuisible dans l'enceinte (80, 81),
des moyens de détection capable de détecter la présence de l'animal nuisible dans l'enceinte (80, 81),
des moyens de signalement pour signaler la détection de la présence de l'animal nuisible dans l'enceinte (80, 81) et des moyens de fermeture (12, 13) capable de fermer l'ouverture d'entrée (82) en réponse aux signaux des moyens de signalement,
le mécanisme étant situé dans l'enceinte (80, 81) et
les moyens de fermeture (12, 13) étant connectés à l'actionneur de commande afin de réaliser la fermeture de l'ouverture d'entrée (82) quand l'actionneur de commande déplace l'organe d'actionnement (5) le long des moyens de guidage (7) dans le boîtier (1, 2, 3) du dispositif.

13. Piège à animal nuisible selon la revendication 12, comportant une seconde entrée et des moyens de fermeture (12, 13, 14) capable de fermer les deux entrées en réponse aux signaux des moyens de signalement.
